# EUROPÄISCHE PATENTSCHRIFT

(11) **EP 3 544 082 B1**
(45) Veröffentlichungstag und Bekanntmachung des Hinweises auf die Patenterteilung: **03.07.2024**
(21) Anmeldenummer: 19160921.3
(22) Anmeldetag: 05.03.2019
(51) Int. Cl.: H01M 50/24, H01M 50/224, H01M 50/271

(54) **GEHÄUSEANORDNUNG ZUR AUFNAHME ELEKTRISCHER SPEICHERMITTEL UND VERFAHREN ZUR HERSTELLUNG EINER GEHÄUSEANORDNUNG**
HOUSING ASSEMBLY FOR ELECTRICAL STORAGE MEANS AND METHOD FOR PRODUCING A HOUSING ASSEMBLY
DISPOSITIF LOGEMENT DESTINÉ DE RECEVOIR DES MOYENS DE STOCKAGE ÉLECTRIQUES ET PROCÉDÉ DE FABRICATION D'UN DISPOSITIF LOGEMENT

(30) Priorität: 19.03.2018 DE 102018106399
(43) Veröffentlichungstag der Anmeldung: 25.09.2019
(73) Patentinhaber: Muhr und Bender KG, 57439 Attendorn (DE)
(72) Erfinder: Scholemann, Björn, 57489 Drolshagen (DE); Mauser, Daniel, 57413 Finnentrop (DE); Danger, Elisabeth, 33100 Paderborn (DE)
(74) Vertreter: Neumann Müller Oberwalleney Patentanwälte PartG mbB

(56) Entgegenhaltungen:
- WO-A1-2015/018618
- DE-A1- 10 246 164
- DE-B3-102016 108 849
- US-A1- 2009 325 049
- US-A1- 2017 018 747
- US-A1- 2017 225 558

## Beschreibung

Die Erfindung betrifft eine Gehäuseanordnung zur Aufnahme elektrischer Speichermittel für ein elektromotorisch antreibbares Kraftfahrzeug sowie ein Verfahren zur Herstellung einer solchen Gehäuseanordnung.

Ein Elektrofahrzeug umfasst unter anderem eine elektrische Maschine als Antriebsquelle, die mit elektrischen Speichermitteln elektrisch verbunden ist. Im Antriebsmodus wandelt die elektrische Maschine elektrische Energie in mechanische Energie zum Antreiben des Kraftfahrzeugs um. Die elektrischen Speichermittel, die auch als Batterie oder Akkumulator bezeichnet werden können, sind in der Regel in einem Batteriekasten aufgenommen, der an der Fahrzeugunterseite mit der Fahrzeugkarosserie befestigt ist.

Aus der US 2009/0325049 A1 ist ein Montagesystem für eine Vielzahl von Batteriemodulen bekannt. Das Montagesystem umfasst eine Grundplatte und einen hiermit über Schraubverbindungen lösbar verbindbaren Deckel. Die Batteriegrundplatte ist flach ausgebildet und wird aus Stahlwerkstoff hergestellt. Der Deckel hat eine innere Ausnehmung, die an die aufzunehmenden Batteriemodule angepasst ist. Es sind zwei hintereinander angeordnete längliche Abschnitte vorgesehen, die in einem oberen Bereich durch einen Spalt voneinander getrennt sind, sowie ein zu den länglichen Abschnitten quer verlaufender Abschnitt. Der Deckel ist aus einem thermoplastischen oder faserverstärkten Verbundmaterial hergestellt.

Aus der DE 10 2016 108 849 B3 ist ein Batteriehalter für ein Kraftfahrzeug bekannt, der ein Bodenblech, einen seitlich umlaufenden Rahmen und einen Deckel aufweist. Das Bodenblech und der Rahmen sind einstückig und wannenförmig aus einem dreilagigen Schichtverbundstahl als Blechumformbauteil hergestellt. Eine innere Lage ist aus einer säurebeständigen Stahllegierung ausgebildet und eine äußere Lage ist aus einer rostfreien Stahllegierung ausgebildet.

Aus der DE 10 2014 226 566 B3 ist ein Batteriekasten für eine Traktionsbatterie eines elektrisch betriebenen Fahrzeugs bekannt. Der Batteriekasten umfasst Seitenwände, die aus einer Strebenkonstruktion aufgebaut sind.

Aus der DE 102 46 164 A1 ist ein Verfahren zum Herstellen von warmgeformten und vergüteten Strukturbauteilen bekannt. Ein Metallband wird durch Flexibles Walzen so hergestellt, dass über die Länge des Metallbandes Bandabschnitte mit unterschiedlicher, den jeweiligen Belastungen des Bauteils angepasster Banddicke erzielt werden. Aus diesem Metallband werden dann Platinen entnommen, die anschließend warmumgeformt werden.

Aus der US 2017/018747 A1 ist eine Speicherbatterievorrichtung bekannt, die folgendes umfasst: eine Speicherbatterieeinheit mit einem Batteriestapel, in dem mehrere Batteriemodule gestapelt sind, und einem Metallgehäuse zum Aufnehmen des Batteriestapels; und ein Halteelement zum Halten der Speicherbatterieeinheit; wobei in einer Ausrichtung, in der die Speicherbatterieeinheit von dem Halteelement gehalten wird, die Batteriemodule entlang einer horizontalen Richtung gestapelt sind, und mindestens eine Seitenfläche des Batteriestapels mit einem Teil des Metallgehäuses in thermischem Kontakt steht. Zwei Metallgehäuse mit identischer Länge und Breite sind nebeneinander an einem gemeinsamen Träger befestigt.

Die US 2017/225558 A1 betrifft ein Fahrzeug mit einer Karosserie, die einen Fahrgastraum bildet und einem Fahrgestell, das die Karosserie trägt. Das Fahrgestell umfasst eine Rahmenstruktur mit einem Paar Seitenschienen, die durch mehrere starre Querschienen verbunden sind und mehrere Buchten zwischen den Querschienen definieren. Ein Batteriesatz enthält mehrere elektrische Speichervorrichtungen, die in einem Batteriegehäuse untergebracht sind, das mehrere Kanäle definiert. Ein Befestigungsmechanismus hält das Batteriegehäuse direkt an den Querschienen, wobei ein Teil des Batteriegehäuses in den Buchten und die Querschienen in den Kanälen angeordnet sind. Ein Formteil mit in Längsrichtung variierender Wandstärke ist durch Bereiche unterschiedlicher Dicke des Batteriegehäuses offenbart, wobei der Gehäuseboden des unteren Gehäuses doppelwandig ausgeführt ist. Die Querschienen sind als Hohlprofile ausgeführt. Eine erste Ausführungsform zeigt ein einteilige Deckel- und Wannenanordnungen. In der zweiten Ausführungsform ist die Wannenanordnungen einteilig, während bei der Deckelanordnung mit zwei Bereichen eine einteilige Ausführung aufweist. Zwischen der Wanne und dem Deckel besteht eine kraftschlüssige Verbindung.

Aus der WO 2015/018618 A1 ist eine Vorrichtung zur Aufnahme zumindest eines Energiemoduls für ein Kraftfahrzeug bekannt, wobei die Vorrichtung ein Gehäuse mit einem ersten und einem zweiten Aufnahmeabschnitt zur Aufnahme zumindest eines Energiemoduls, und einem zwischen dem ersten und dem zweiten Aufnahmeabschnitt angeordneten Verbindungsabschnitt umfasst. Der Verbindungsabschnitt lässt bei Aufbringung einer vorbestimmten Kraft auf das Gehäuse unter Verformung eine vorgegebene von der Verformung resultierende Relativbewegung zwischen dem ersten und dem zweiten Aufnahmeabschnitt zu.

Der vorliegenden Erfindung liegt die Aufgabe zugrunde, eine Gehäuseanordnung zur Aufnahme elektrischer Speichermittel für ein elektromotorisch antreibbares Kraftfahrzeug vorzuschlagen, das ein geringes Gewicht und gute Dichtigkeitseigenschaften aufweist sowie einfach und kostengünstig herstellbar ist. Die Aufgabe besteht weiter darin, ein entsprechendes Verfahren zur Herstellung einer solchen Gehäuseanordnung vorzuschlagen.

Die Aufgaben werden durch eine Gehäuseanordnung gemäß Anspruch 1 und durch ein Verfahren zur Herstellung einer Gehäuseanordnung gemäß Anspruch 12 gelöst.

Die Gehäuseanordnung zur Aufnahme elektrischer Speichermittel für den Antrieb eines elektrisch antreibbaren Kraftfahrzeugs, umfasst: eine Wannenanordnung, in welche elektrische Speichermittel einsetzbar sind, und eine Deckelanordnung, welche auf die Wannenanordnung aufsetzbar und mit dieser lösbar verbindbar ist; wobei zumindest eine von der Wannenanordnung und der Deckelanordnung ein erstes Formteil und ein zweites Formteil aufweist, die jeweils einen Boden und Seitenwände aufweisen; wobei das erste Formteil und das zweite Formteil jeweils aus flexibel gewalztem metallischem Material hergestellt sind und eine variable Blechdicke in Längsrichtung des jeweiligen Formteils aufweisen, wobei insbesondere die Länge in Längsrichtung des jeweiligen Formteils größer ist als die Breite quer zur Längsrichtung; und wobei das erste Formteil und das zweite Formteil nebeneinander angeordnet und in einem sich in Längsrichtung erstreckenden Verbindungsbereich beziehungsweise Fügebereich miteinander verbunden beziehungsweise gefügt sind.

Ein Vorteil liegt darin, dass einzelne Teile der Wannenanordnung und/oder der Deckelanordnung hinsichtlich der Materialdicke über der Länge des jeweiligen Teils individuell an die Anforderungen in Bezug auf die Festigkeit und Steifigkeit angepasst werden können. Die Dimensionierung der einzelnen Abschnitte der Formteile kann individuell in Abhängigkeit von den zu erwartenden Belastungen erfolgen. Durch gezielte Reduktion der Dicke der Formteile in geringer belasteten Bereichen kann Material eingespart werden, so dass die Gehäuseanordnung letztlich ohne Einbußen in Bezug auf die mechanischen Eigenschaften ein geringes Gewicht aufweist und somit kostengünstig hergestellt werden kann. Durch gezielte Erhöhung der Dicke der Formteile in höher belasteten Bereichen, insbesondere in crashrelevanten Bereichen, kann eine höhere Festigkeit erreicht werden, so dass die Gehäuseanordnung eine hohe Last aufnehmen kann ohne zerstört zu werden. Der Boden und die Seitenwände des jeweiligen Formteils sind vorzugsweise einteilig gestaltet. Dies führt zu einer integralen Wannenform, die in sich dicht ist. Ein Austreten von Batterieflüssigkeit aus dem Formteil beziehungsweise ein Eindringen von Schmutz in das Formteil wird effektiv vermieden. Die einteilige Wannenform wird aus einer Platine als Ausgangsprodukt hergestellt, beispielsweise durch einen Umformprozess der Platine, oder durch Schneid-, Kant- und Schweißoperationen der Platine. Die Wannenanordnung hat in vorteilhafter Weise eine in sich geschlossene, abgedichtete und selbsttragende Struktur mit einer hohen Steifigkeit und Festigkeit.

Mit dem Begriff Formteil soll im Rahmen der vorliegenden Offenbarung jedes metallische Bauteil mit umfasst sein, das aus einem Metallflachprodukt wie einer Blechplatine zu einem dreidimensionalen Element umgeformt wird. Die Wannenanordnung und/oder die Deckelanordnung können jeweils aus mehreren Formteilen zusammengesetzt sein, die auch als Wannenteile beziehungsweise Deckelteile bezeichnet werden können. Es ist jedoch auch möglich, dass nur eine der Anordnungen (Wannen- oder Deckelanordnung) aus mehreren miteinander verbundenen Formteilen zusammengesetzt ist, während die andere Anordnung (Deckel- oder Wannenanordnung) nur aus einem Formteil besteht. Die Herstellung der Formteile kann nach einer ersten Möglichkeit so erfolgen, dass diese inklusive Umformprozess zunächst separat hergestellt und nachträglich miteinander verbunden werden. Alternativ ist es auch möglich, dass die Stahlflachprodukte zunächst miteinander verbunden und, dann gemeinsam umgeformt werden, um die beiden Formteile auszubilden.

Die Formteile können aus jedem technisch geeigneten Metall hergestellt sein, insbesondere aus einem Stahlflachprodukt, wie höherfesten, höchstfesten oder ultrahochfesten Stählen, wie beispielsweise Dualphasen-, Komplexphasen-, TRIP-Stählen, oder aus härtbaren Stählen, wie borlegierten Vergütungsstählen hergestellt werden. Es ist auch der Einsatz von Leichtmetall, wie Aluminium oder Aluminiumlegierungen als Flachprodukt möglich.

Zum Erreichen einer besonders hohen Festigkeit der Gehäuseanordnung ist es günstig, wenn zumindest eine Teilzahl der Formteile gehärtet ist. Unter einem gehärteten Formteil wird vorliegend insbesondere ein metallisches Bauteil verstanden, das aus einem härtbaren Stahlwerkstoff hergestellt und im Rahmen eines Umformprozesses umgeformt und gleichzeitig oder anschließend zumindest in Teilbereichen, vorzugsweise vollständig gehärtet worden ist. Nach dem Härten hat das Bauteil eine höhere Festigkeit als vor dem Härten. Das Umformen und Härten kann insbesondere mittels Warmumformen erfolgen. Es können beispielsweise mangan-bor-legierte Vergütungsstähle, wie 17MnB3, 22MnB5, 26MnB5 oder 34MnB5, verwendet werden. Das Ausgangsmaterial (Bandmaterial) hat vorzugsweise eine Zugfestigkeit von mindestens 500 MPa. Das fertig hergestellte Formteil kann eine Endzugfestigkeit von mindestens 1100 MPa, vorzugsweise mindestens 1300 MPa, besonders bevorzugt sogar von mehr als 1500 MPa zumindest in Teilbereichen aufweisen.

Erfindungsgemäß weisen Endabschnitte des ersten und/oder zweiten Formteils eine größere Blechdicke auf, als zumindest ein zwischen den Endabschnitten liegender Zwischenabschnitt des jeweiligen Formteils. Durch die grö-ßere Blechdicke in den Endabschnitten wird eine hohe Festigkeit erreicht, so dass in diesen Bereichen Kräfte, die beispielsweise aufgrund eines möglichen Unfalls auf die Gehäuseanordnung einwirken können, aufgenommen und abgestützt werden können. Die Endabschnitte mit größerer Blechdicke können eine Länge von 20 mm bis 200 mm aufweisen, ohne hierauf eingeschränkt zu sein. Die Blechdicke kann in den Endabschnitten beispielsweise zwischen 1,0 mm und 3,5 mm, insbesondere zwischen 1,5 und 2,0 mm liegen. Zwischen den Endabschnitten können ein oder mehrere Abschnitte mit kleinerer Blechdicke vorgesehen sein. Diese können eine Blechdicke von 0,5 mm bis 1,5 mm aufweisen. Es versteht sich, dass die angegebenen Dickenwerte beispielhaft sind und von dem verwendeten Stahlmaterial und den technischen Anforderungen an die Festigkeit haben.

Für eine besonders hohe Stabilität der Gehäuseanordnung kann vorgesehen werden, dass das erste Formteil und/oder das zweite Formteil zwischen den Endabschnitten des jeweiligen Formteils zumindest einen Verstärkungsabschnitt aufweist, der eine größere Blechdicke aufweist als die hieran angrenzenden Zwischenabschnitte. Beispielsweise können die Formteile, je nach gewünschter Steifigkeit, ein, zwei, drei oder mehr Verstärkungsabschnitte mit größerer Blechdicke aufweisen. Die verdickten Verstärkungsabschnitte verlaufen parallel zueinander, beziehungsweise parallel zu den verdickten Endabschnitten. Zwischen jeweils einem Abschnitt mit größerer Blechdicke und einem Abschnitt mit dünnerer Blechdicke ist jeweils ein Übergangsabschnitt mit variabler Blechdicke vorgesehen, wobei die Übergangsabschnitte vorzugsweise einen rampenartigen Verlauf haben. Die Ausgestaltung von einem oder mehreren der Formteile mit variabler Blechdicke über der Länge ist besonders günstig, da gegebenenfalls auf sonst nötige separate Verstärkungselemente in der Gehäuseanordnung verzichtet werden kann.

Nach einer Ausführungsform können die Verstärkungsabschnitte des jeweiligen Formteils so angeordnet sein, dass sie in einem Angrenzungsbereich zwischen zwei in das Formteil benachbart zueinander einzusetzenden Batteriemodulen angeordnet sind. Hierdurch wird eine effiziente Bauraumausnutzung erreicht. Dies gilt für die Formteile der Wannenanordnung und/oder für die Formteile der Deckelanordnung. Sofern zwei oder mehr Formteile parallel nebeneinander angeordnet sind ist es für eine gute Kraftübertragung günstig, wenn zumindest ein Verstärkungsabschnitt eines ersten Formteils und ein Verstärkungsabschnitt eines zweiten Formteils miteinander fluchten. Die Verstärkungsabschnitte können jedoch auch versetzt zueinander angeordnet sein.

Der Füge- beziehungsweise Verbindungsbereich kann insbesondere in Form eines längsverlaufenden Steges gestaltet sein, der die zwei Formteile miteinander verbindet. So kann in vorteilhafter Weise auf einen separaten Längssteg verzichtet werden, was sich günstig auf den Fertigungs- und Montageaufwand auswirkt. Das erste und das zweite Formteil können im Verbindungsbereich im stumpfen Stoß, überlappend und/oder mittels eines Verstärkungselements miteinander verbunden sein. Vorzugsweise sind das erste Formteil und das zweite Formteil im Verbindungsbereich miteinander verschweißt, wobei andere Befestigungsmethoden wie Verschrauben und/oder Kleben ebenso möglich sind. Für eine einfache und kostengünstige Fertigung sind zumindest einige der Formteile der Wannenanordnung untereinander identisch gestaltet. Dies gilt vorzugsweise entsprechend auch für die Formteile der Deckelanordnung, von denen zumindest zwei untereinander gleich gestaltet sind.

Die Wannenanordnung und die Deckelanordnung können aus gleichem oder unterschiedlichem Material hergestellt sein. Beispielsweise kann vorgesehen sein, dass eine der Anordnungen, das heißt die Wannen- oder Deckelanordnung, aus Stahlblech hergestellt wird, während die andere Anordnung, das heißt die Deckel- oder Wannenanordnung, aus einem anderen Material hergestellt wird. Dabei kann das andere Material beispielsweise ein anderer Stahlwerkstoff, ein anderer metallischer Werkstoff, wie Aluminium oder eine Aluminiumlegierung, oder ein nichtmetallischer Werkstoff, insbesondere ein faserverstärkter Kunststoff sein.

Die Gehäuseanordnung kann so gestaltet sein, dass nur die Wannenanordnung entsprechend mit variabler Blechdicke ausgeführte Formteile aufweist, oder nur die Deckelanordnung entsprechend mit variabler Blechdicke ausgeführte Formteile aufweist, oder beide, die Wannenanordnung und die Deckelanordnung, entsprechend mit variabler Blechdicke gestaltete Formteile aufweist. Sofern die Wannenanordnung und die Deckelanordnung jeweils aus miteinander verbundenen ersten und zweiten oder mehr Formteilen zusammengesetzt sind, ist es zum Erreichen einer hohen Steifigkeit günstig, wenn die Formteile der Wannenanordnung eine variable Dicke in einer ersten Richtung haben, und die Formteile der Deckelanordnung eine variable Dicke in einer hierzu quer verlaufenden zweiten Richtung haben. Beispielsweise kann vorgesehen sein, dass die Formteile der Wannenanordnung eine variable Blechdicke in Längsrichtung des Kraftfahrzeugs und, dass die Formteile der Deckelanordnung eine variable Blechdicke in Querrichtung des Kraftfahrzeugs aufweisen.

Die Lösung der oben genannten Aufgabe umfasst weiter das Verfahren zur Herstellung einer Gehäuseanordnung umfassend eine Wannenanordnung und eine Deckelanordnung zur Aufnahme elektrischer Speichermittel für den Antrieb eines elektrisch antreibbaren Kraftfahrzeugs, wobei zumindest ein Formteil der Gehäuseanordnung hergestellt wird durch die Schritte: Flexibles Walzen eines Stahlbands zur Erzeugung einer variablen Dicke über der Länge; Vereinzeln des flexibel gewalzten Stahlbands zu Blechplatinen; Umformen einer Blechplatine zu einem Formteil mit einem Boden und Seitenwänden, wobei das Formteil zumindest einen Abschnitt mit größerer Blechdicke aufweist, der sich quer zur Längserstreckung des Formteils erstreckt. Es ist insbesondere vorgesehen, dass zumindest eines der Elemente Wannenanordnung und Deckelanordnung hergestellt wird durch Flexibles Walzen eines Stahlbands, Vereinzeln des flexibel gewalzten Stahlbands zu Blechplatinen, in beliebiger Reihenfolge Fügen und Umformen einer ersten und einer zweiten Blechplatine zu einer Anordnung aus einem miteinander gefügten ersten und zweiten Formteil, wobei das erste und zweite Formteil jeweils einen Boden und Seitenwände und zumindest einen Abschnitt mit größerer Blechdicke aufweisen, der sich quer zur Längserstreckung des jeweiligen Formteils erstreckt.

Erfindungsgemäß wird das Stahlband derart flexibel gewalzt, dass Endabschnitte des ersten Formteils eine größere Blechdicke aufweisen, als zumindest ein zwischen den Endabschnitten liegender Zwischenabschnitt des ersten Formteils, und/oder dass Endabschnitte des zweiten Formteils eine größere Blechdicke aufweisen als zumindest ein zwischen den Endabschnitten liegender Zwischenabschnitt des zweiten Formteils,

Mit dem genannten Verfahren lassen sich in vorteilhafter Weise Gehäuseanordnungen herstellen, die hinsichtlich ihrer Materialdicken an die Anforderungen in Bezug auf die Belastung angepasst sind. Unter verbesserter Ausnutzung des eingesetzten Materials können die erfindungsgemäß hergestellten Gehäuseanordnungen denselben oder höheren Belastungen standhalten, wie kastenartig mit separaten Versteifungen aufgebaute Gehäuse, wobei das Gewicht und damit die Herstellungs- und Betriebskosten reduziert werden können. Es gelten alle oben im Zusammenhang mit dem erfindungsgemäßen Erzeugnis gemachten Ausführungen gleichermaßen auch für das Verfahren, insbesondere im Hinblick auf die Dickenverläufe der Bauteile, und umgekehrt, vom Verfahren auch für das Erzeugnis. Es versteht sich, dass weitere Fertigungsschritte vor-, zwischen oder nachgeschaltet sein können. Insbesondere können vor oder nach dem Umformen mehrere einzelne Blechplatinen miteinander verschweißt werden, um eine größere Wannen- beziehungsweise Deckelanordnung zu bilden.

Beim Flexiblen Walzen wird Bandmaterial mit im Wesentlichen einheitlicher Blechdicke durch Verändern des Walzspalts während des Prozesses zu Bandmaterial mit variabler Blechdicke über der Länge ausgewalzt. Die durch das Flexible Walzen erzeugten Abschnitte unterschiedlicher Dicke erstrecken sich quer zur Längsrichtung beziehungsweise zur Walzrichtung des Bandmaterials. Das Bandmaterial kann nach dem Flexiblen Walzen auf einfache Weise wieder zum Coil aufgewickelt werden und an anderer Stelle der Weiterverarbeitung zugeführt werden, oder es kann direkt weiterverarbeitet werden, beispielsweise durch Ablängen des Bandmaterials zu einzelnen Blechelementen. Aus flexibel gewalztem Bandmaterial hergestellte Blechplatinen werden auch als Tailor Rolled Blanks bezeichnet.

Das Vereinzeln des flexibel gewalzten Bandmaterials zu Blechplatinen kann mittels Stanzen oder Schneiden erfolgen. Bei dem Vereinzelungsschritt kann es sich im einfachsten Fall um ein Ablängen des Bandmaterials in Teilstücke handeln.

Das Umformen der Blechplatine oder eines aus mehreren verbundenen Blechplatinen gebildeten Platinenverbundes kann beispielsweise ein Pressen und/oder Tiefziehen umfassen.

Zum Erreichen einer besonders hohen Festigkeit kann als Ausgangsmaterial ein Stahlband aus einem härtbaren Stahlwerkstoff, insbesondere einem mangan-bor-legierten Stahlwerkstoff, verwendet werden, wobei das Umformen der Blechplatine zum Formteil vorzugsweise im Wege eines Warmumformens erfolgt. Das Warmumformen umfasst die Teilschritte: Erwärmen der Blechplatine auf Austenitisierungstemperatur, anschließendes Umformen der erwärmten Blechplatine in einem Warmumformwerkzeug und schnelles Abkühlen, so dass ein gehärtetes Formteil entsteht. In Konkretisierung erfolgt das Erwärmen derart, dass zumindest teilweise, vorzugsweise vollständig austenitisches Gefüge vorliegt (Austenitisierungstemperatur). Anschließend wird das erwärmte Werkstück in ein Warmformwerkzeug eingelegt und darin umgeformt und derart stark abgekühlt, dass eine gehärtete, martensitische Gefügestruktur entsteht. Dieser Prozess wird auch als Presshärten bezeichnet.

Das Warmumformen kann nach einer ersten Möglichkeit als indirekter Prozess durchgeführt werden, der die Teilschritte Kaltvorformen, anschließendes Erwärmen des kalt vorgeformten Bauteils auf Austenitisierungstemperatur sowie anschließendes Warmumformen zur Erzeugung der Endkontur des Erzeugnisses umfasst. Das Warmumformen kann nach einer zweiten Möglichkeit auch als direkter Prozess durchgeführt werden, der dadurch gekennzeichnet ist, dass das Bauteil direkt auf Austenitisierungstemperatur erwärmt und anschließend zur gewünschten Endkontur in einem Schritt warmumgeformt wird. Ein vorhergehendes (kaltes) Vorformen findet hier nicht statt.

Die Schritte Fügen und Umformen der Blechplatinen können in beliebiger Reihenfolge durchgeführt werden, das heißt erst Fügen der Platinen zu einem Platinenverbund und dann Umformen des gefügten Platinenverbundes zur Anordnung mit Formteilen, oder erst Umformen der einzelnen Platinen zu Formteilen und anschließend Fügen der Formteile zur Anordnung. Nach einer möglichen Konkretisierung kann insbesondere vorgesehen sein: Verbinden einer ersten Blechplatine und einer hierzu parallel angeordneten zweiten Blechplatine zu einem Platinenverbund, wobei zwischen der ersten Blechplatine und der zweiten Blechplatine ein sich in Längsrichtung erstreckender Verbindungsbereichs gebildet ist; und Umformen des Platinenverbunds in einem Umformwerkzeug derart, dass das erste Blechelement zu einem ersten Formteil und das zweite Blechelement zu einem zweiten Formteil umgeformt werden, wobei der Verbindungsbereich nach dem Umformen zwischen den zwei Formteilen liegt.

Bevorzugte Ausführungsformen werden nachstehend anhand der Zeichnungsfiguren erläutert. Hierin zeigt:
- Figur 1A: eine erfindungsgemäße Gehäuseanordnung zur Aufnahme elektrischer Speichermittel in einer ersten Ausführungsform in perspektivischer Ansicht, teilweise geschnitten;
- Figur 1B: die Gehäuseanordnung aus Figur 1A in Draufsicht;
- Figur 1C: die Gehäuseanordnung gemäß Schnittlinie I-I aus Figur 1B;
- Figur 1D: die Gehäuseanordnung gemäß Schnittlinie II-II aus Figur 1B;
- Figur 1E: die Einzelheit III aus Figur 1D als Detail;
- Figur 1F: die Gehäuseanordnung aus Figur 1A in perspektivischer Explosionsdarstellung mit eingezeichnetem Verlauf der Materialdicke über der Länge eines Wannenformteils;
- Figur 1G: den Verlauf der Materialdicke des Wannenformteils aus Figur 1F;
- Figur 2A: eine erfindungsgemäße Gehäuseanordnung zur Aufnahme elektrischer Speichermittel in einer abgewandelten zweiten Ausführungsform im Querschnitt;
- Figur 2B: die Einzelheit IV aus Figur 2A als Detail;
- Figur 2C: die Einzelheit V aus Figur 2A als Detail;
- Figur 3A: eine erfindungsgemäße Gehäuseanordnung zur Aufnahme elektrischer Speichermittel in einer abgewandelten weiteren Ausführungsform im Querschnitt;
- Figur 3B: die Einzelheit VI aus Figur 3A als Detail;
- Figur 3C: die Einzelheit VII aus Figur 3A als Detail;
- Figur 4A: eine erfindungsgemäße Gehäuseanordnung zur Aufnahme elektrischer Speichermittel in einer weiteren Ausführungsform in perspektivischer Ansicht, in teilweiser Explosionsdarstellung;
- Figur 4B: den Verlauf der Materialdicke des Deckelformteils aus Figur 4A;
- Figur 4C: den Schnitt VIII-VIII aus Figur 4A als Einzelheit;
- Figur 5: den Verbindungsbereich einer Gehäuseanordnung in einer weiteren Ausführungsform im Querschnitt;
- Figur 6: den Verbindungsbereich einer Gehäuseanordnung in einer weiteren Ausführungsform im Querschnitt;
- Figur 7: eine erfindungsgemäße Gehäuseanordnung zur Aufnahme elektrischer Speichermittel in einer weiteren Ausführungsform mit Wannenanordnung mit über der Länge; und
- Figur 8: ein erfindungsgemäßes Verfahren zur Herstellung einer Wannenanordnung und/oder Deckelanordnung für eine erfindungsgemäße Gehäuseanordnung in einer Ausführungsform.

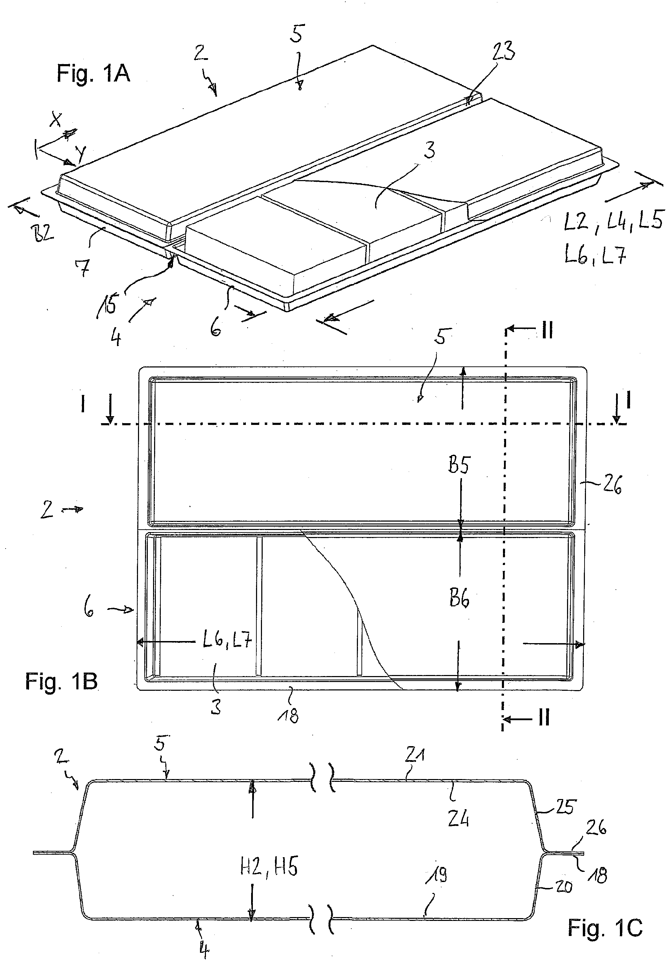

Die Figuren 1A bis 1G, welche im Folgenden gemeinsam beschrieben werden, zeigen eine erfindungsgemäße Gehäuseanordnung 2, in welcher elektrische Speichermittel 3 aufgenommen werden können, in einer ersten Ausführungsform. Eine solche Gehäuseanordnung 2 kann mit der Karosserie eines Kraftfahrzeugs verbunden werden. Die elektrischen Speichermittel 3 dienen zum Speichern elektrischer Energie, mit welcher ein Elektromotor des elektrisch antreibbaren Kraftfahrzeugs mit Strom versorgt werden kann.

Die Gehäuseanordnung 2 weist eine Wannenanordnung 4 und eine Deckelanordnung 5 auf, die miteinander lösbar verbindbar sind, beispielsweise mittels Schraub- oder Bolzenverbindungen (nicht gezeigt). Die Gehäuseanordnung 2 hat in der vorliegenden Ausführungsform einen verhältnismäßig flachen Aufbau, wobei es sich versteht, dass in Abhängigkeit von Größe, Form und Anzahl der aufzunehmenden elektrischen Speichermittel 3 auch andere Gehäuseformen möglich sind. Die Länge L2 und/oder die Breite B2 der Gehäuseanordnung 2 kann um ein Vielfaches größer als deren mittlere Höhe H2 sein, insbesondere größer als das 4-fache der mittleren Höhe H2 (L2 > 4H2 und/oder B2 > 4H2), gegebenenfalls auch größer als das 8-fache der mittleren Höhe H2 (L2 > 8H2 und/oder B2 > 8H2). Die Wannenanordnung 4 kann auch als Oberschale und die Deckelanordnung 5 auch als Unterschale bezeichnet werden.

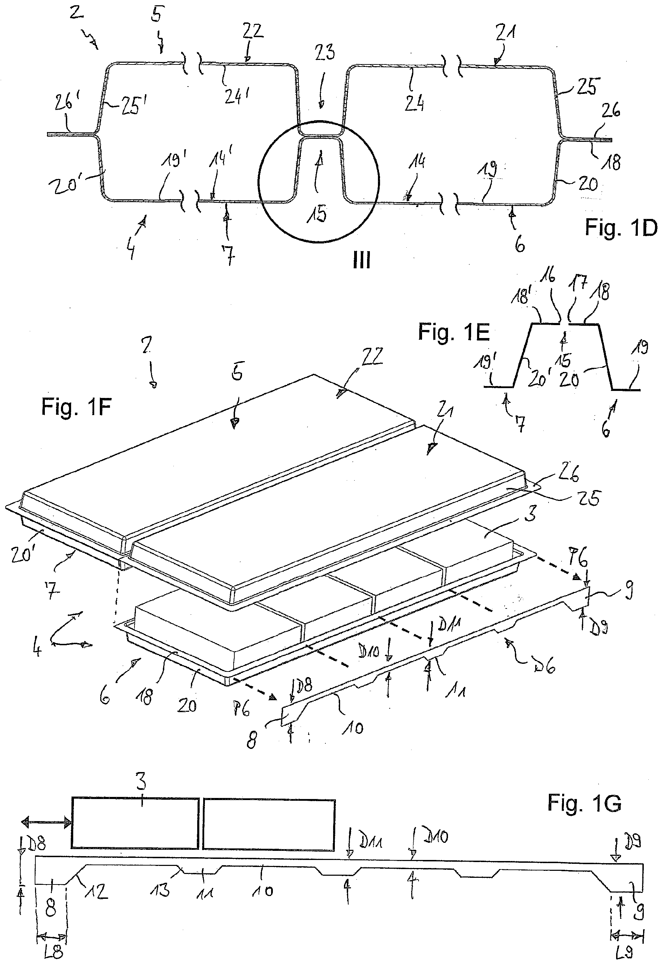

Die Wannenanordnung 4 umfasst ein erstes Formteil 6 und ein zweites Formteil 7, die miteinander fest verbunden beziehungsweise gefügt sind, beispielsweise mittels Schweißen. Die beiden Formteile 6, 7 sind vorliegend gleich gestaltet, wobei es sich versteht, dass diese auch unterschiedlich gestaltet sein können. Wie insbesondere in den Figuren 1C und 1D erkennbar, sind die beiden Formteile 6, 7 wannenförmig gestaltet und umfassen jeweils einen Boden 19 und eine umlaufenden Seitenwand 20, die einteilig ausgebildet sind. Die beiden Formteile 6, 7 sind nebeneinander angeordnet und über ihre Länge L4 miteinander verbunden. Die Länge L6, L7 der Formteile 6, 7 ist bei der vorliegenden Ausführungsform größer als deren jeweilige Breite B6, B7, ohne hierauf eingeschränkt zu sein. Die Gehäuseanordnung 2 kann in das Kraftfahrzeug so eingebaut werden, dass die Längserstreckungsrichtung x des Gehäuses parallel zur Längsrichtung des Kraftfahrzeugs ausgerichtet ist.

Das erste und das zweite Formteil 6, 7 sind jeweils aus flexibel gewalztem Stahlblech hergestellt, so dass sie eine variable Blechdicke D6 über der Länge des jeweiligen Formteils 6, 7 aufweisen. Eine Projektion der Seitenfläche des Wannenteils 5 ist in Figur 1F am Ende der Pfeile P6 dargestellt sowie in Figur 1G als Detail dargestellt. Soweit die beiden Formteile gleich gestaltet sind, gelten die für eines der Formteile 6, 7 beschriebenen Einzelheiten auch für das jeweils andere (7, 6). Es ist erkennbar, dass das Wannenteil 6 verdickte Endabschnitte 8, 9 hat. Durch die größere Blechdicke D8, D9 in den Endabschnitten 8, 9 haben die Wannenteile 6, 7 hier eine hohe Festigkeit, so dass hohe Kräfte aufgenommen und abgestützt werden können. Die Endabschnitte 8, 9 haben eine Dicke D8, D9 von vorzugsweise 1,0 mm bis 3,5 mm, und eine Länge L8, L9 von vorzugsweise 20 mm bis 200 mm.

Zwischen den Endabschnitten 8, 9 sind dünnere Abschnitte 10 und dickere Verstärkungsabschnitte 11 gebildet, die abwechselnd angeordnet sind. Zwischen den verdickten Endabschnitten 8, 9 und den hierzu benachbarten dünneren Abschnitten 10, sowie zwischen den dünneren Abschnitten 10 und den hierzu benachbarten Verstärkungsabschnitten 11 sind jeweils Übergangsabschnitte 12, 13 mit stetig veränderlicher Blechdicke gebildet. Die Wannenteile 6, 7 sind vorliegend so gestaltet, dass diese eine ebene Oberfläche 14 aufweisen, auf der die Batteriemodule 3 aufliegen, das heißt die Veränderung der Blechdicke D ist nach außen gerichtet. Die Verstärkungsabschnitte 11 haben vorliegend eine Dicke D11, die kleiner ist als die Dicke D8, D9 der Endabschnitte D8, D9 und größer ist als die Dicke D10 der dünneren Abschnitte 10. Dabei können die dünneren Abschnitte 10 eine Blechdicke von 0,5 mm bis 1,5 mm aufweisen, beispielsweise 1,0 mm. Die Verstärkungsabschnitte 11 können beispielsweise eine Dicke D11 von 1,0 mm bis 3,5 mm aufweisen.

Wie insbesondere in Figur 1G erkennbar, sind die Verstärkungsabschnitte 11 in einem Angrenzungsbereich zwischen zwei in das Wannenteil 6, 7 benachbart zueinander einzusetzenden Batteriemodulen 3 angeordnet. Es wird somit in diesen Angrenzungsbereichen zwischen zwei Batteriemodulen 3 eine aussteifende Funktion erreicht, so dass die Gehäuseanordnung 2 mit darin eingesetztem Batterien 3 insgesamt eine hohe Steifigkeit erhält. Zwischen jeweils zwei verdickten Verstärkungsabschnitten 11 liegen jeweils die dünneren Abschnitte 10. Die verdickten Endabschnitte 8, 9, die jeweils an das letzte Batteriemodul 3 anschließen, dienen jeweils als Energieabsorptionsabschnitt (in Figur 1 G mit einem Pfeil dargestellt).

Die beiden Wannenteile 6, 7 sind entlang ihrer innenliegenden Längskanten 16, 17 in einem in Längsrichtung x verlaufenden Verbindungsbereich 15 miteinander verschweißt, der auch als Fügebereich bezeichnet werden kann. Dabei bilden die Längskanten 16, 17 im Verbindungsbereich die Seitenkanten eines umlaufenden Flanschabschnitts 18, 18' des jeweiligen Wannenteils 6, 7. Bei der vorliegenden Ausführungsform sind die Längskanten 16, 17 der beiden Wannenteile 6, 7 im stumpfen Stoß miteinander verschweißt, wie in Figur 1E schematisch dargestellt. Es versteht sich, dass auch andere Ausgestaltungen der Verbindung möglich sind, was weiter unten noch näher erläutert wird. Der Fügebereich erstreckt sich vorliegend in Längsrichtung zwischen den beiden Formteilen und bildet insofern einen Längssteg mit entsprechender Verstärkungsfunktion in Längsrichtung.

Die Deckelanordnung 4 ist ähnlich aufgebaut wie die Wannenanordnung 3 und umfasst ein erstes Formteil 21 und ein zweites Formteil 22, die im Verbindungsbereich 23 fest miteinander verbunden sind. Die beiden Formteile 21, 22 sind vorliegend gleich gestaltet, wobei es sich versteht, dass diese auch unterschiedlich gestaltet sein können. Ferner kann die Deckelanordnung auch aus einem Teil hergestellt sein. Wie insbesondere in den Figuren 1C und 1D erkennbar, sind die beiden Formteile 21, 22 wannenförmig gestaltet und umfassen einen Boden 24 und eine umlaufenden Seitenwand 25 sowie einen umlaufenden Flanschabschnitt 26, die einteilig ausgebildet sind. Die beiden Formteile 21, 22 sind nebeneinander angeordnet und über ihre Länge L5 miteinander verbunden.

Bei der vorliegenden Ausführungsform sind die beiden Formteile 21, 22, die auch als Deckelteile bezeichnet werden können, aus Stahlblech mit einer konstanten Blechdicke D21, D22 hergestellt, ohne hierauf eingeschränkt zu sein. Beispielsweise kann die Deckelanordnung 5 auch - wie die Wannenanordnung - aus Blech mit variabler Dicke oder aus einem anderen Werkstoff, wie beispielsweise Leichtmetall oder Kunststoff, insbesondere aus faserverstärktem Kunststoff hergestellt sein. Die Materialdicke der Deckelteile 21, 22 wird dabei nach Bedarf an die Festigkeit beziehungsweise Crasheigenschaften ausgelegt.

Die Wannenanordnung 4 und die Deckelanordnung 5 werden nach dem Einsetzen der Batteriemodule 3 fest miteinander verbunden. Dies kann beispielsweise mittels Schraubverbindungen (nicht dargestellt) vorgenommen werden, mit denen die Flanschabschnitte 18, 26 der aufeinander liegenden Formteile 6, 21; 7, 22 miteinander verbunden werden. Dabei ist insbesondere vorgesehen, dass die Fügestelle zwischen der Wannenanordnung 4 und der Deckelanordnung 5 mittels geeigneter Dichtmittel, beispielsweise eines umlaufenden Dichtringes oder klebenden Dichtmasse nach au-ßen abgedichtet werden. Die so aus Wannenanordnung 4 und Deckelanordnung 5 zugsammengesetzte Gehäuseanordnung 2 bildet eine in sich geschlossene, abgedichtete und selbsttragende Struktur mit einer hohen Steifigkeit und Festigkeit.

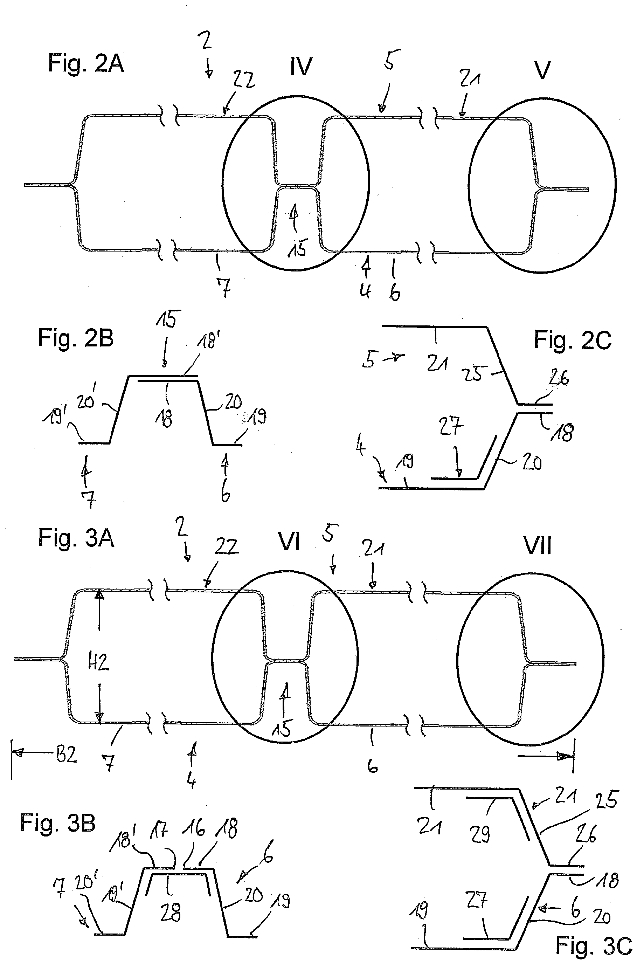

Die Figuren 2A bis 2C zeigen eine erfindungsgemäße Gehäuseanordnung 2 in einer weiteren Ausführungsform. Diese entspricht weitestgehend der Ausführungsform nach Figur 1A bis 1G, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in Figur 1.

Ein erster Unterschied besteht in der Ausgestaltung der Verbindung 15 zwischen dem ersten Wannenteil 6 und dem zweiten Wannenteil 7. Wie in der in Figur 2B gezeigten Einzelheit IV aus Figur 2A erkennbar, sind der Flanschabschnitt 18 der ersten Wannenteils 6 und der Flanschabschnitt 18' des zweiten Wannenteils 7 so ausgestaltet, dass sie einander im Verbindungsbereich 15 überlappen. Auf diese Weise ist hier die Materialdicke verdoppelt, so dass in Längsrichtung der Anordnung 2 insgesamt eine höhere Festigkeit und Steifigkeit erreicht wird.

Ein weiterer Unterschied ist, dass die Wannenteile 6, 7 jeweils entlang ihrer äußeren Seitenwände 20 Verstärkungsbleche 27 eingeschweißt haben, die sich vorzugsweise über die gesamte Länge der Wannenabschnitte erstrecken und somit ebenfalls für eine gesteigerte Festigkeit beziehungsweise Steifigkeit sorgen.

Die Figuren 3A bis 3C zeigen eine erfindungsgemäße Gehäuseanordnung 2 in einer weiteren Ausführungsform. Diese entspricht weitestgehend der Ausführungsform nach Figur 1A bis 1G, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in Figur 1.

Ein Unterschied besteht in der Ausgestaltung der Verbindung 15 zwischen dem ersten Wannenteil 6 und dem zweiten Wannenteil 7. Wie in der in Figur 3B gezeigten Einzelheit VI aus Figur 3A erkennbar, sind der Flanschabschnitt 18 der ersten Wannenteils 6 und der Flanschabschnitt 18' des zweiten Wannenteils 7 mit ihren Kanten 16, 17 aneinander angelegt und mittels eines Verstärkungselements 28, auch Patch genannt, miteinander verbunden. Die Verbindung kann beispielsweise mittels Schweißen im Bereich der Flansche 18, 19 mit dem Verstärkungselement 28 vorgenommen werden. Durch diese Weise ist die Materialdicke im Verbindungsbereich 15 verdoppelt, so dass in Längsrichtung der Anordnung 2 insgesamt eine höhere Festigkeit und Steifigkeit erreicht wird.

Eine weitere Besonderheit der vorliegenden Ausführungsform besteht darin, dass sowohl die Wannenteile 6, 7 - wie bei der Ausführungsform nach Figur 2 - als auch die Deckelteile 21, 22 jeweils entlang ihrer äußeren Seitenwände 20, 25 Verstärkungsbleche 27, 29 eingeschweißt haben, die sich vorzugsweise über die gesamte Länge der wannenförmigen Formabschnitte erstrecken und somit ebenfalls für eine gesteigerte Festigkeit und Steifigkeit in Längsrichtung sorgen.

Es versteht sich, dass diese Ausführungsformen nur beispielhaft und weitere Abwandlungen denkbar sind. Beispielsweise ist auch eine Verbindungsanordnung mit stumpfem Stoß der Wannenteile 6, 7 wie in Figur 1 gezeigt, mit einer Aussteifung des Randbereichs der Wanne und/oder des Deckels wie in Figur 2C beziehungsweise 3C gezeigt, möglich. Ebenso ist auch eine Verbindung 15, wie in Figur 2B oder 3B gezeigt, ohne weitere Versteifung im Randbereich der Wanne beziehungsweise des Deckels möglich.

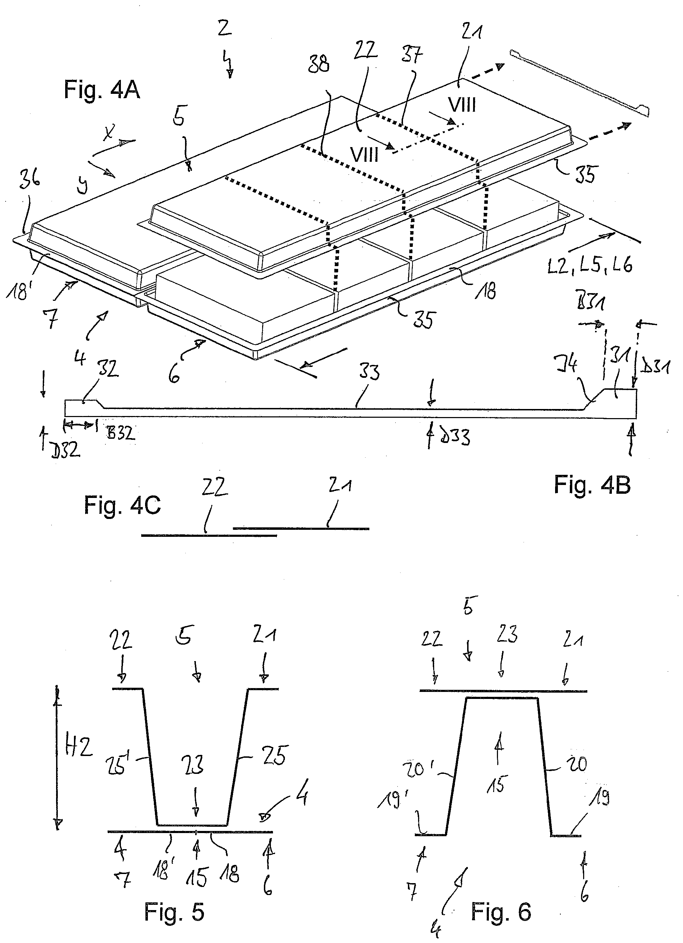

Die Figuren 4A bis 4C zeigen eine erfindungsgemäße Gehäuseanordnung 2 in einer weiteren Ausführungsform. Diese entspricht weitestgehend der Ausführungsform nach Figur 1A bis 1G, so dass hinsichtlich der Gemeinsamkeiten auf die obige Beschreibung Bezug genommen wird. Dabei sind gleiche beziehungsweise einander entsprechende Bauteile mit gleichen Bezugszeichen versehen wie in Figur 1.

Die Ausgestaltung der Wannenanordnung 4 entspricht der Wannenanordnung gemäß Figur 1, so dass diesbezüglich zur Vermeidung von Wiederholungen auf die obige Beschreibung zur Figur 1 Bezug genommen wird.

Bei der vorliegenden Ausführungsform nach Figur 4A bis Figur 4C umfasst auch die Deckelanordnung 5 aus flexibel gewalztem Bandmaterial hergestellte Formteile 21, 22. Dabei liegt die Besonderheit darin, dass die Formteile 21, 22 eine variable Blechdicke in Querrichtung y der Gehäuseanordnung 2 haben, das heißt senkrecht zum variablen Dickenverlauf der Wannenanordnung 4. Die Formteile 21, 22 erstrecken sich über die gesamte Breite B der Gehäuseanordnung 2, das heißt von einer Außenkante 35 zur anderen Außenkante 36.

Die Blechplatinen, aus denen die Formteile 21, 22 hergestellt sind, sind vorliegend untereinander gleich gestaltet, können aber auch unterschiedliche Blechdickenverläufe aufweisen. Soweit die beiden Formteile 21, 22 gleich gestaltet sind, gelten die für das eine Formteil 21 beschriebenen Einzelheiten auch für das andere Formteil 22. Es ist in Figur 4A erkennbar, dass das das Formteil 21 eine variable Blechdicke D21 über der Länge des Formteils 21 aufweist. Eine Projektion der Seitenfläche des Formteils 21, das auch als Deckelteil bezeichnet werden kann, ist in Figur 4A am Ende der Pfeile dargestellt sowie in Figur 4B als Detail dargestellt. Es ist erkennbar, dass das Deckelteil 21 verdickte Endabschnitte 31, 32 hat. Durch die größere Blechdicke D31, D32 in den Endabschnitten 31, 32 haben die Deckelteile 21, 22 hier eine hohe Festigkeit, so dass hohe Seitenkräfte aufgenommen und abgestützt werden können. Der Dickenverlauf kann individuell entsprechend den Anforderungen in Bezug auf die Festigkeit und Steifigkeit eingestellt werden. Vorliegend hat der seitlich außenliegende Endabschnitt 31 eine größere Dicke D31, als der innenliegende Abschnitt 32, welcher an das benachbarte Deckelteil 22 angeschlossen ist. Die Dicke der Endabschnitte 31, 32 kann beispielsweise zwischen 1,0 mm und 3,5 mm liegen, die Breite B31, B32 kann beispielsweise zwischen 20 mm bis 200 mm sein. Zwischen den Endabschnitten 31, 32 ist ein dünnerer Abschnitt 33 vorgesehen, der eine Dicke von beispielsweise 0,5 mm bis 1,5 mm haben kann. Zwischen den verdickten Endabschnitten 31, 32 und dem dünneren Abschnitt 33 sind jeweils Übergangsabschnitte 34 mit stetig veränderlicher Blechdicke gebildet.

Es ist ferner in Figur 4C erkennbar, dass zwei benachbarte Deckelteile 21, 22 überlappend miteinander verbunden sind, insbesondere mittels Schweißen. Durch die überlappende Verbindung wir eine erhöhte Steifigkeit in Querrichtung y der Gehäuseanordnung 2 erreicht. Die Fügestellen 37, 38 der parallel zueinander verlaufenden Blechplatinen, aus denen die Deckelteile 21, 22 hergestellt sind, sind so angeordnet, dass sie in gefügtem Zustand im Bereich zweier aneinander angrenzender Batteriemodule 3 liegen.

Alle der vorstehend beschriebenen Ausführungsformen haben gemein, dass sowohl das Wannenteil 4 als auch das Deckelteil 5 wannenförmig gestaltet sind, mit einem Unterboden 19 beziehungsweise Oberboden 24 und einem umlaufenden Wandungsabschnitt 20, 25. Nach einer hierzu abgewandelten Ausführungsform, die in Figur 5 gezeigt ist, ist es auch möglich, dass die Wannenanordnung 4 im Verbindungsbereich 15 flach ausgebildet ist und sich die Wannenform des Deckels 5 über die gesamte Höhe H2 erstreckt. Nach einer umgekehrten Ausführungsform, die in Figur 6 gezeigt ist, ist es auch möglich, dass die Deckelanordnung 5 im Verbindungsbereich 23 flach ausgebildet ist und sich die Wannenform der Wanne 4 über die gesamte Höhe H2 erstreckt.

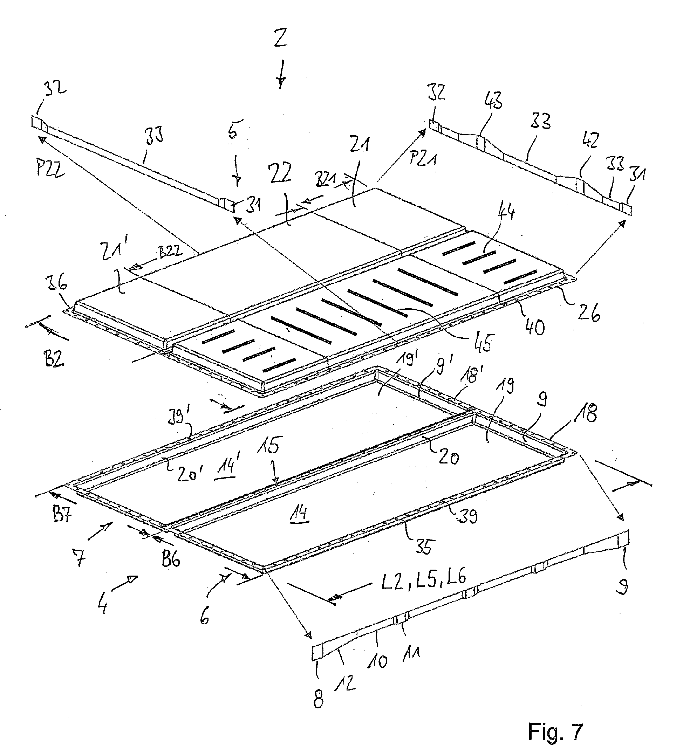

Die Figur 7 zeigt eine erfindungsgemäße Gehäuseanordnung 2 in einer weiteren Ausführungsform. Diese entspricht weitestgehend der Ausführungsform nach Figur 1A bis 1G, beziehungsweise der Ausführungsform nach Figur 4A bis 4C, auf deren Beschreibung hinsichtlich der Gemeinsamkeiten insofern Bezug genommen wird. Dabei sind gleiche beziehungsweise einander entsprechende Bauteile mit gleichen Bezugszeichen versehen wie in den obigen Figuren.

Bei der vorliegenden Ausführungsform nach Figur 7 entspricht die Ausgestaltung der Wannenanordnung 4 derjenigen gemäß Figur 1, auf deren Beschreibung zur Vermeidung von Wiederholungen verwiesen wird. Es sind im Flanschbereich 18 der Wannenanordnung 4 über den Umfang verteilte Durchgangsöffnungen 39 für die Schraubverbindungen erkennbar. Die Deckelanordnung 5 hat entsprechende Bohrungen 40, durch welche geeignete Schrauben durchgesteckt und verspannt werden können. Auch im Verbindungsbereich 15, 23 ist eine Reihe mit Löchern zum Verschrauben der Wannen- und Deckelanordnung 4, 5 vorgesehen.

Die Deckelanordnung 5 ist aus mehreren Blechplatinen aus flexibel gewalztem Bandmaterial hergestellt. Dabei haben die endseitigen Formteile 21, 21' einen ersten Blechdickenverlauf, dessen Projektion am Ende der Pfeile P21 erkennbar ist. Das zwischen den endseitigen Formteilen 21, 21' liegende Formteil 22 hat einen zweiten Blechdickenverlauf, dessen Projektion am Ende der Pfeile P22 erkennbar ist. Alle Formteile 21, 22 des Deckels 5 haben eine variable Blechdicke in Querrichtung y der Gehäuseanordnung 2, das heißt senkrecht zum variablen Dickenverlauf der Wannenanordnung 4. Die Formteile 21, 22 erstrecken sich jeweils über die gesamte Breite B2 der Gehäuseanordnung 2, das heißt von einer Außenkante 35 zur anderen Außenkante 36.

Die Blechplatinen, aus denen die endseitigen Formteile 21, 21' hergestellt sind, sind vorliegend untereinander gleich gestaltet, können aber auch unterschiedliche Blechdickenverläufe aufweisen. Es ist erkennbar, dass das Deckelteil 21 verdickte Endabschnitte 31, 32 hat, an den sich jeweils in Richtung Verbindungsabschnitt 23 dünnere Zwischenabschnitte 33 anschließen, wobei im Zentralbereich einer jeweiligen wannenförmigen Vertiefung wieder eine Verdickung 42, 43 vorgesehen ist. Zwischen den beiden Verdickungen 42, 43 befindet sich wieder ein zentraler Abschnitt 33 mit geringer Blechdicke D33, welcher in montiertem Zustand mit dem Verbindungsabschnitt 15 der Wannenanordnung 4 verbunden ist. Die endseitigen Verdickungen 31, 32 bewirken eine erhöhte Festigkeit gegen seitliche Aufprallkräfte. Die mittigen Verdickungen 42, 43 erhöhen die Lastaufnahmefähigkeit in Längsrichtung x der Gehäuseanordnung 2.

Der Dickenverlauf der Blechplatine, aus denen das mittlere Deckelteil 22 hergestellt wird, ist ähnlich wie in der Ausführungsform gemäß Figur 4. Die Endabschnitte 31, 32 sind verdickt, wobei die Dicke hier insbesondere so eingestellt werden kann wie bei den Endabschnitten der endseitigen Platinen 21, 21'. Zwischen den Endabschnitten 31, 32 ist ein Zwischenabschnitt 33 mit gleichbleibender geringerer Blechdicke D33 vorgesehen. Es ist weiter erkennbar, dass die Breite B22 der zentralen Platine 22 größer ist als die Breite B21, B21' der endseitigen Platinen 21, 21'. Die jeweils aneinander angrenzenden Platinen 21, 22; 22, 21' können in stumpfem Stoß oder überlappend miteinander verbunden werden. Eine oder mehrere der Formteile 21, 22, 21' können mit Versteifungssicken 44, 45, 44' versehen sein.

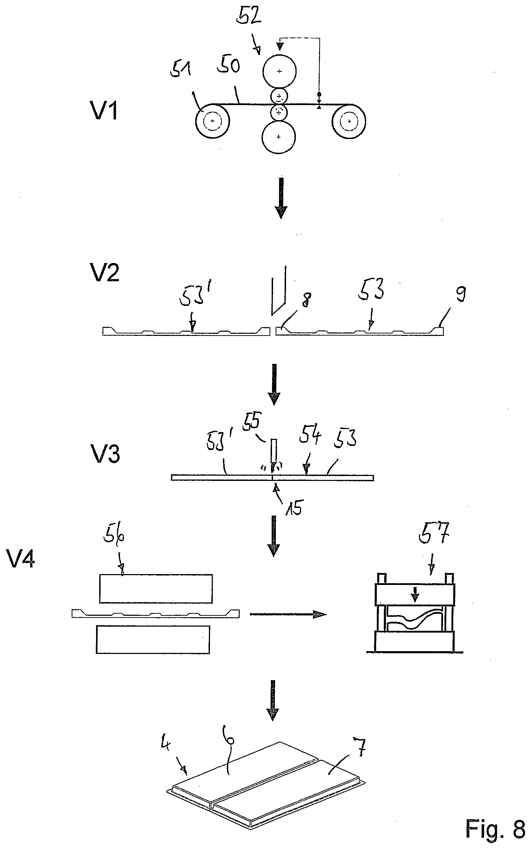

In Figur 8 ist exemplarisch ein erfindungsgemäßes Verfahren zur Herstellung einer Wannen- beziehungsweise Deckelabschnitt 4, 5 für eine erfindungsgemäße Gehäuseanordnung 2 in einer möglichen Ausführungsform gezeigt.

Im Verfahrensschritt V1 wird das Bandmaterial 50, das im Ausgangszustand auf einem Coil 51 aufgewickelt ist, walzend bearbeitet, und zwar mittels flexiblem Walzen. Hierfür wird das Bandmaterial 50, das vor dem flexiblen Walzen eine weitestgehend konstante Blechdicke über der Länge aufweist, mittels Walzen 52 derart gewalzt, das es längs der Walzrichtung eine variable Blechdicke erhält. Während des Walzens wird der Prozess überwacht und gesteuert, wobei die von einer Blechdickenmessung ermittelten Daten als Eingangssignal zur Steuerung der Walzen 52 verwendet werden. Nach dem flexiblen Walzen hat das Bandmaterial 50 sich jeweils quer zur Walzrichtung erstreckende Bereiche mit unterschiedlicher Dicke. Das Bandmaterial wird nach dem flexiblen Walzen wieder zum Coil aufgewickelt, so dass es dem nächsten Verfahrensschritt zugeführt werden kann.

Im Verfahrensschritt V2 wird das flexibel gewalzte Stahlband zu Blechplatinen 53, 53' vereinzelt.

In einem nachfolgenden Verfahrensschritt V3 werden zwei Blechplatinen 53, 53' miteinander zu einem Platinenverbund 54 verbunden, insbesondere verschweißt. Das Verbinden erfolgt vorliegend entlang der längsten Länge der Blechplatinen 53, 53`, das heißt quer zu den einzelnen dicken und dünnen Abschnitten der Platinen.

In einem nachfolgenden Verfahrensschritt V4 wird der Platinenverbund 54 mittels Warmumformen umgeformt. Das Warmumformen umfasst die Teilschritte Erwärmen in einem Ofen 56, Transfer in das Warmformwerkzeug 57, wo der Platinenverbund 54 zu einer Wannenanordnung 4 beziehungsweise Deckelanordnung 5 umgeformt und gehärtet wird.

### Bezugszeichenliste

- 2: Gehäuseanordnung
- 3: Speichermittel
- 4: Wannenanordnung
- 5: Deckelanordnung
- 6: erstes Formteil
- 7: zweites Formteil
- 8: Endabschnitt
- 9: Endabschnitt
- 10: dünnerer Abschnitt
- 11: Verstärkungsabschnitt
- 12: Übergangsabschnitt
- 13: Übergangsabschnitt
- 14: Oberfläche
- 15: Verbindungsbereich
- 16: Längskante
- 17: Längskante
- 18, 18`: Flanschabschnitt
- 19: Boden
- 20: Seitenwand
- 21: erstes Formteil
- 22, 22': zweites Formteil
- 23: Verbindungsbereich
- 24: Boden
- 25, 25`: Seitenwand
- 26: Flanschabschnitt
- 27: Verstärkungsblech
- 28: Verstärkungselement
- 29: Verstärkungsblech
- 31: Endabschnitt
- 32: Endabschnitt
- 34: Übergangsabschnitt
- 35: Außenkante
- 36: Außenkante
- 37: Fügestelle
- 38: Fügestelle
- 39: Durchgangsöffnung
- 40: Durchgangsöffnung

- 42: Verdickung
- 43: Verdickung
- 44: Versteifungssicke
- 45: Versteifungssicke

- B: Breite
- D: Dicke
- H: Höhe
- L: Länge
- P: Pfeil
- V: Verfahrensschritt
- x: Längsrichtung
- y: Querrichtung

## Patentansprüche

1. Gehäuseanordnung zur Aufnahme elektrischer Speichermittel für den Antrieb eines elektrisch antreibbaren Kraftfahrzeugs, umfassend:
eine Wannenanordnung (4), in welche elektrische Speichermittel (3) einsetzbar sind,
eine Deckelanordnung (5), welche auf die Wannenanordnung (4) aufsetzbar und mit dieser lösbar verbindbar ist,
wobei zumindest eine von der Wannenanordnung (4) und der Deckelanordnung (5) ein erstes Formteil (6; 21) und ein zweites Formteil (7; 22) aufweist, die jeweils einen Boden (19, 24) und Seitenwände (20, 25) aufweisen,
wobei eine Länge (L6, L7) des jeweiligen Formteils in Längsrichtung größer ist als eine Breite (B6, B7) quer zur Längsrichtung,
und wobei das erste Formteil (6; 21) und das zweite Formteil (7; 22) nebeneinander angeordnet und in einem sich in Längsrichtung erstreckenden Fügebereich (15, 23) miteinander gefügt sind;
**dadurch gekennzeichnet, dass** das erste Formteil (6; 21) und das zweite Formteil (7; 22) jeweils aus flexibel gewalztem metallischem Material hergestellt sind und eine variable Blechdicke in Längsrichtung des jeweiligen Formteils (6, 7; 21, 22) aufweisen;
wobei Endabschnitte (8, 9; 31, 32) des ersten Formteils (6; 21) eine größere Blechdicke (D8, D9; D31, D32) aufweisen, als zumindest ein zwischen den Endabschnitten liegender Zwischenabschnitt (10, 33) des ersten Formteils (6;
wobei Endabschnitte (8, 9; 31, 32) des zweiten Formteils (7; 22) eine größere Blechdicke (D8, D9; D31, D32) aufweisen als zumindest ein zwischen den Endabschnitten liegender Zwischenabschnitt (10, 33) des zweiten Formteils (7; 22).

2. Gehäuseanordnung nach Anspruch 1,
**dadurch gekennzeichnet,**
**dass** das erste Formteil (6; 21) und das zweite Formteil (7; 22) aus einem härtbaren Stahlwerkstoff, insbesondere einem Mangan-Bor-legierten Stahlwerkstoff, hergestellt und gehärtet sind, insbesondere mittels Warmumformen.

3. Gehäuseanordnung nach Anspruch 1 oder 2,
**dadurch gekennzeichnet,**
**dass** das erste Formteil (6; 21) zwischen den Endabschnitten (8, 9; 31, 32) zumindest einen Verstärkungsabschnitt (11, 42, 43) aufweist, der eine größere Blechdicke (D11, D42, D43) aufweist als der Zwischenabschnitt (10, 33),
und/oder,
**dass** das zweite Formteil (7; 22) zwischen den Endabschnitten (8, 9; 31, 32) zumindest einen Verstärkungsabschnitt (11, 42, 43) aufweist, der eine größere Blechdicke (D11, D42, D43) aufweist als der Zwischenabschnitt (10, 33).

4. Gehäuseanordnung nach Anspruch 3,
**dadurch gekennzeichnet,**
**dass** einer der Verstärkungsabschnitte (11, 42, 43) des ersten Formteils (6; 21) und einer der Verstärkungsabschnitte (11, 42, 43) des zweiten Formteils (7; 22) quer zur Längserstreckung des ersten und zweiten Formteils verlaufen und miteinander fluchten.

5. Gehäuseanordnung nach Anspruch 3 oder 4,
**dadurch gekennzeichnet,**
**dass** der zumindest eine Verstärkungsabschnitt (11) des ersten Formteils (6; 21) so angeordnet ist, dass er in einem Angrenzungsbereich zwischen zwei in das erste Formteil (6; 21) benachbart zueinander einzusetzenden Batteriemodulen (3) angeordnet ist, und/oder,
**dass** der zumindest eine Verstärkungsabschnitt (11) des zweiten Formteils (7; 22) so angeordnet ist, dass er in einem Angrenzungsbereich zwischen zwei in das zweite Formteil (7; 22) benachbart zueinander einzusetzenden Batteriemodulen (3) angeordnet ist.

6. Gehäuseanordnung nach einem der Ansprüche 1 bis 5,
**dadurch gekennzeichnet,**
**dass** das erste Formteil (6; 21) und das zweite Formteil (7; 22) im Fügebereich (15, 23) im stumpfen Stoß, überlappend und/oder mittels eines Verstärkungselements (28) miteinander verbunden sind.

7. Gehäuseanordnung nach einem der Ansprüche 1 bis 6,
**dadurch gekennzeichnet,**
**dass** das erste Formteil (6; 21) und das zweite Formteil (7; 22) im Fügebereich (15, 23) miteinander verschweißt sind.

8. Gehäuseanordnung nach einem der Ansprüche 1 bis 7,
**dadurch gekennzeichnet,**
**dass** das erste Formteil (6; 21) und das zweite Formteil (7; 22) identisch gestaltet sind.

9. Gehäuseanordnung nach einem der Ansprüche 1 bis 8,
**dadurch gekennzeichnet,**
**dass** die Wannenanordnung (4) und die Deckelanordnung (5) jeweils aus miteinander verbundenen ersten und zweiten Formteilen (5, 6; 21, 22) zusammengesetzt sind, von denen zumindest eine Teilzahl aus flexibel gewalztem Stahlblech hergestellt ist,
wobei die Formteile (5, 6) der Wannenanordnung (4) eine variable Dicke in einer ersten Richtung (x) haben, und die Formteile (21, 22) der Deckelanordnung (5) eine variable Dicke in einer zweiten Richtung (y) haben, die senkrecht zur ersten Richtung (x) verläuft.

10. Gehäuseanordnung nach Anspruch 9,
**dadurch gekennzeichnet,**
**dass** die Formteile (5, 6) der Wannenanordnung (4) eine variable Blechdicke in Längsrichtung (x) haben und,
**dass** die Formteile (21, 22) der Deckelanordnung (5) eine variable Blechdicke in Querrichtung (y) haben.

11. Gehäuseanordnung nach einem der Ansprüche 1 bis 10,
**dadurch gekennzeichnet,**
**dass** die Wannenanordnung (4) und die Deckelanordnung (5) aus unterschiedlichen Materialien hergestellt sind.

12. Verfahren zur Herstellung einer Gehäuseanordnung umfassend eine Wannenanordnung (4) und eine Deckelanordnung (5) zur Aufnahme elektrischer Speichermittel (3) für den Antrieb eines elektrisch antreibbaren Kraftfahrzeugs,
wobei zumindest eine Anordnung von der Wannenanordnung (4) und der Deckelanordnung (5) hergestellt wird durch:
Flexibles Walzen eines Stahlbands zur Erzeugung einer variablen Dicke über der Länge, wobei das Stahlband derart flexibel gewalzt wird,
dass Endabschnitte (8, 9; 31, 32) des ersten Formteils (6; 21) eine größere Blechdicke (D8, D9; D31, D32) aufweisen, als zumindest ein zwischen den Endabschnitten liegender Zwischenabschnitt (10, 33) des ersten Formteils (6; 21), und/oder,
dass Endabschnitte (8, 9; 31, 32) des zweiten Formteils (7; 22) eine größere Blechdicke (D8, D9; D31, D32) aufweisen als zumindest ein zwischen den Endabschnitten liegender Zwischenabschnitt (10, 33) des zweiten Formteils (7; 22), Vereinzeln des flexibel gewalzten Stahlbands zu Blechplatinen,
in beliebiger Reihenfolge Fügen und Umformen einer ersten und einer zweiten Blechplatine zu einer Anordnung mit einem miteinander gefügten ersten und zweiten Formteil (6, 7; 21, 22) gebildet wird, wobei das erste und zweite Formteil (6, 7; 21, 22) jeweils einen Boden und Seitenwände und zumindest einen Abschnitt mit größerer Blechdicke aufweisen, der sich quer zur Längserstreckung des jeweiligen Formteils (6, 7; 21, 22) erstreckt.

13. Verfahren nach Anspruch 12,
**dadurch gekennzeichnet,**
**dass** das Stahlband aus einem härtbaren Stahlwerkstoff, insbesondere einem Mangan-Bor-legierten Stahlwerkstoff, hergestellt wird,
wobei das Umformen der Blechplatine zum Formteil (6, 7; 21, 22) im Wege eines Warmumformens erfolgt mit den Teilschritten Erwärmen der Blechplatine auf Austenitisierungstemperatur, anschließendes Umformen der erwärmten Blechplatine in einem Warmumformwerkzeug und schnelles Abkühlen, so dass ein gehärtetes Formteil (6, 7; 21, 22) entsteht.

14. Verfahren nach Anspruch 12 oder 13,
**gekennzeichnet durch** die Schritte:
Verbinden einer ersten Blechplatine und einer hierzu parallel angeordneten zweiten Blechplatine zu einem Platinenverbund, wobei zwischen der ersten Blechplatine und der zweiten Blechplatine ein sich in Längsrichtung erstreckender Fügebereich gebildet ist, und
Umformen des Platinenverbundes in einem Umformwerkzeug derart, dass das erste Blechelement zum ersten Formteil (6; 21) und das zweite Blechelement zum zweiten Formteil (7; 22) umgeformt werden, wobei der Fügebereich (15, 23) nach dem Umformen zwischen den zwei Formteilen (6, 7; 21, 22) liegt.

## Claims

1. Housing assembly for receiving electric storage means for a drive of an electrically drivable motor vehicle, comprising:
a tray arrangement (4) in which electric storage means (3) are insertable, and
a cover arrangement (5) which is placeable on the tray arrangement (4) and releasably connectable thereto,
wherein at least one of the tray arrangement (4) and the cover arrangement (5) comprises a first formed part (6; 21) and a second formed part (7; 22) each having a bottom (19, 24) and side walls (20, 25), wherein a length (L6, L7) of the respective formed part in the longitudinal direction is greater than a width (B6, B7) transverse to the longitudinal direction, and wherein the first formed part (6; 21) and the second formed part (7; 22) are arranged adjacent to each other and joined with each other along a joining region (15, 23) extending in the longitudinal direction;
**characterised in that**
the first formed part (6; 21) and the second formed part (7; 22) are each made of flexibly rolled metallic material and have a variable sheet thickness in a longitudinal direction of the respective formed part (6, 7; 21, 22);
wherein end sections (8, 9; 31, 32) of the first formed part (6; 21) have a greater sheet thickness (D8, D9; D31, D32) than at least one intermediate section (10, 33) of the first formed part (6; 21) arranged therebetween, and/or,
wherein end sections (8, 9; 31, 32) of the second formed part (7; 22) have a greater sheet thickness (D8, D9; D31, D32) than at least one intermediate section (10, 33) of the second formed part (7; 22) arranged therebetween.

2. Housing assembly according to claim 1,
**characterized in**
**that** the first formed part (6; 21) and the second formed part (7; 22) are produced from a hardenable steel material, in particular a manganese-boron alloyed steel material, and are hardened, in particular by means of hot forming.

3. Housing assembly according to claim 1 or 2,
**characterized in**
**that** the first formed part (6; 21) has, between the end sections (8, 9; 31, 32), at least one reinforcing section (11, 42, 43) which has a greater sheet thickness (D11, D42, D43) than the intermediate section (10, 33),
and/or,
**that** the second formed part (7; 22) has, between the end sections (8, 9; 31, 32), at least one reinforcing section (11, 42, 43) which has a greater sheet thickness (D11, D42, D43) than the intermediate section (10, 33).

4. Housing assembly according to claim 3,
**characterized in**
**that** a reinforcing section (11, 42, 43) of the first formed part (6; 21) and a reinforcing section (11, 42, 43) of the second formed part (7; 22) extend transversely to the longitudinal extension of the first and second formed parts and are aligned with one another.

5. Housing assembly according to claim 3 or 4,
**characterized in**
**that** the at least one reinforcing section (11) of the first formed part (6; 21) is provided in a region, in which two battery modules (3) to be inserted into the first formed part (6; 21) are arranged adjacent to each other, and/or,
**that** the at least one reinforcing section (11) of the second formed part (7; 22) is provided in a region, in which two battery modules (3) to be inserted into the second formed part (7; 22) are arranged adjacent to each other.

6. Housing assembly according to any one of claims 1 to 5,
**characterized in**
**that** the first formed part (6; 21) and the second formed part (7; 22) are connected to one another in the joining region (15, 23) in a butt joint, overlapping joint and/or by means of a reinforcing element (28).

7. Housing assembly according to any one of claims 1 to 6,
**characterized in**
**that** the first formed part (6; 21) and the second formed part (7; 22) are welded together in the joining region (15, 23).

8. Housing assembly according to any one of claims 1 to 7,
**characterized in**
**that** the first formed part (6; 21) and the second formed part (7; 22) are identically formed.

9. Housing assembly according to any one of claims 1 to 8,
**characterized in**
**that** the tray arrangement (4) and the cover arrangement (5) each comprise a first formed part (5, 6) and a second formed part (21, 22) connected thereto, at least a part number of which is produced from flexibly rolled steel sheet,
wherein the first and second formed parts (5, 6) of the tray arrangement (4) have a variable thickness in a first direction (x), and the first and second formed parts (21, 22) of the cover arrangement (5) have a variable thickness in a second direction (y) perpendicular to the first direction (x).

10. Housing assembly according to claim 9,
**characterized in**
**that** the first and second formed parts (5, 6) of the tray arrangement (4) have a variable sheet thickness in the longitudinal direction (x) and,
**that** the first and second formed parts (21, 22) of the cover arrangement (5) have a variable sheet thickness in the transverse direction (y).

11. Housing assembly according to any one of claims 1 to 10,
**characterized in**
**that** the tray arrangement (4) and the cover arrangement (5) are made of different materials.

12. Method for producing a housing assembly comprising a tray arrangement (4) and a cover arrangement (5) for receiving electrical storage means (3) for a drive of an electrically drivable motor vehicle,
wherein at least one of the tray arrangement (4) and a cover arrangement (5) is produced by:
flexible rolling of a steel strip to produce a variable thickness over a length, with the steel strip being flexibly rolled such that
end sections (8, 9; 31, 32) of the first formed part (6; 21) have a greater sheet thickness (D8, D9; D31, D32) than at least one intermediate section (10, 33) of the first formed part (6; 21) arranged therebetween, and/or,
that end sections (8, 9; 31, 32) of the second formed part (7; 22) have a greater sheet thickness (D8, D9; D31, D32) than at least one intermediate section (10, 33) of the second formed part (7; 22) arranged therebetween,
separating of the flexibly rolled steel strip into sheet metal blanks,
in any order joining and forming a first and second sheet metal blank so as to form an arrangement with a first and second formed part (6, 7; 21, 22) joined to each other, wherein the first and second formed part (6, 7; 21, 22) each have a base and side walls and at least one section of greater sheet thickness extending transversely to a longitudinal extension of the respective formed part (6, 7; 21, 22).

13. Method according to claim 12,
**characterized in**
**that** the steel strip is produced from a hardenable steel material, in particular a manganese boron alloyed steel material,
wherein the forming of the sheet metal blank into the formed part (6, 7; 21, 22) is effected by hot forming with the partial steps of heating the sheet metal blank to austenitizing temperature, subsequent forming of the heated sheet metal blank in a hot forming tool and rapid cooling such that a hardened formed part (6, 7; 21, 22) is produced.

14. Method according to claim 12 or 13,
**characterized by** the steps:
connecting a first sheet metal blank and a second sheet metal blank arranged adjacent thereto to form a composite sheet metal blank, wherein a joining region is formed in a longitudinal direction between the first sheet metal blank and the second sheet metal blank, and
forming the composite sheet metal blank in a forming tool such that the first sheet metal blank is formed to the first formed part (6; 21) and the second sheet metal blank is formed to the second formed part (7; 22), wherein the joining region (15, 23) is arranged between the two formed parts (6, 7; 21, 22) after the forming.

## Revendications

1. Agencement de boîtier pour recevoir des moyens de stockage électriques pour l'entraînement d'un véhicule automobile à propulsion électrique, comprenant :
un dispositif de bac (4) dans lequel des moyens de stockage électrique (3) peuvent être insérés, et
un dispositif de couvercle (5), qui peut être placé sur le dispositif de bac (4) et peut être relié de manière amovible à celui-ci,
dans lequel au moins l'un du dispositif de bac (4) et du dispositif de couvercle (5) comprend une première partie formée (6; 21) et une seconde partie formée (7; 22), chacune comprenant un fond (19, 24) et des parois latérales (20, 25), dans lequel une longueur (L6, L7) de la partie formée respective dans la direction longitudinale est plus grand qu'une largeur (B6, B7) transversale à la direction longitudinale, et dans lequel la première partie formée (6; 21) et la deuxième partie formée (7; 22) sont disposées l'une à côté de l'autre et jointes l'une à l'autre le long d'une zone d'jonction (15, 23) s'étendant dans la direction longitudinale;
**caractérisé par le fait que**
la première partie formée (6; 21) et la deuxième partie formée (7; 22) étant chacune fabriquée en matériau métallique laminé flexible et ont une épaisseur de tôle variable dans la direction longitudinale de la partie formée respective (6, 7; 21, 22),
dans lequel des sections d'extrémité (8, 9; 31, 32) de la première partie formée (6; 21) présentant une épaisseur de tôle (D8, D9; D31, D32) supérieure à au moins une section intermédiaire (10, 33) de la première partie formée (6; 21) située entre les sections d'extrémité, et/ou,
dans lequel des sections d'extrémité (8, 9; 31, 32) de la deuxième partie formée (7; 22) présentent une épaisseur de tôle (D8, D9; D31, D32) supérieure à celle d'au moins une section intermédiaire (10, 33) de la deuxième partie formée (7; 22) située entre les sections d'extrémité.

2. Agencement de boîtiers selon la revendication 1,
**caractérisé en ce**
**que** la première partie formée (6; 21) et la deuxième partie formée (7; 22) sont fabriquées à partir d'un matériau d'acier durcissable, en particulier un matériau d'acier allié au manganèse-bore, et sont durcies, en particulier par formage à chaud.

3. Agencement de boîtiers selon la revendication 1 ou 2,
**caractérisé en ce**
**que** la première partie formée (6; 21) présente entre les sections d'extrémité (8, 9; 31, 32) au moins une section de renforcement (11, 42, 43) qui présente une épaisseur de tôle (D11, D42, D43) plus grande que la section intermédiaire (10, 33),
et/ou
**que** la deuxième partie formée (7; 22) présente entre les sections d'extrémité (8, 9; 31, 32) au moins une section de renforcement (11, 42, 43) qui présente une épaisseur de tôle (D11, D42, D43) plus grande que la section intermédiaire (10, 33).

4. Agencement de boîtiers selon la revendication 3,
**caractérisé en ce**
**que** l'une des sections de renforcement (11, 42, 43) de la première partie formée (6; 21) et l'une des sections de renforcement (11, 42, 43) de la deuxième partie formée (7; 22) s'étendent transversalement à l'extension longitudinale des première et deuxième parties formées et sont alignées l'une avec l'autre.

5. Agencement de boîtier selon la revendication 3 ou 4,
**caractérisé en ce**
**que** l'au moins une section de renforcement (11) de la première partie formée (6; 21) est disposée de manière à être placée dans une zone adjacente entre deux modules de batterie (3) à insérer dans la première partie formée (6; 21) au voisinage l'un de l'autre, et/ou,
**que** l'au moins une section de renforcement (11) de la deuxième partie formée (7; 22) est disposée de manière à être placée dans une zone adjacente entre deux modules de batterie (3) à insérer dans la deuxième partie formée (7; 22) de manière adjacente l'un à l'autre.

6. Agencement de boîtiers selon l'une quelconque des revendications 1 à 5,
**caractérisé en ce**
**que** la première partie formée (6; 21) et la deuxième partie formée (7; 22) sont reliées l'une à l'autre dans la zone d'jonction (15, 23) en bout à bout, en se chevauchant et/ou au moyen d'un élément de renforcement (28).

7. Agencement de boîtiers selon l'une quelconque des revendications 1 à 6,
**caractérisé en ce**
**que** la première partie formée (6; 21) et la deuxième partie formée (7; 22) sont soudées entre elles dans la zone d'jonction (15, 23).

8. Agencement de boîtiers selon l'une quelconque des revendications 1 à 7,
**caractérisé en ce**
**que** la première partie formée (6; 21) et la deuxième partie formée (7; 22) sont conçues de manière identique.

9. Agencement de boîtiers selon l'une quelconque des revendications 1 à 8,
**caractérisé en ce**
**que** le dispositif de bac (4) et le dispositif de couvercle (5) sont respectivement composés de première et deuxième parties formées (5, 6; 21, 22) reliées entre elles, dont au moins un nombre partiel est fabriqué en tôle d'acier laminée de manière flexible,
dans lequel les parties formées (5, 6) du dispositif de bac (4) ont une épaisseur variable dans une première direction (x), et les parties formées (21, 22) du dispositif de couvercle (5) ont une épaisseur variable dans une seconde direction (y) qui est perpendiculaire à la première direction (x).

10. Agencement de boîtiers selon la revendication 9,
**caractérisé en ce**
**que** les parties formées (5, 6) du dispositif de bacs (4) ont une épaisseur de tôle variable dans la direction longitudinale (x) et,
**que** les parties formées (21, 22) du dispositif de couvercle (5) ont une épaisseur de tôle variable dans la direction transversale (y).

11. Agencement de boîtiers selon l'une quelconque des revendications 1 à 10,
**caractérisé en ce**
**que** le dispositif de bac (4) et le dispositif de couvercle (5) sont fabriqués dans des matériaux différents.

12. Procédé de fabrication d'un agencement de boîtier comprenant un dispositif de bac (4) et un dispositif de couvercle (5) destiné à recevoir des moyens des stockage électriques (3) pour l'entraînement d'un véhicule automobile à propulsion électrique,
dans lequel au moins un du dispositif de bac (4) et du dispositif de couvercle (5) est réalisé par :
laminer flexible d'une bande d'acier pour produire une épaisseur variable sur la longueur, la bande d'acier étant ainsi laminée de manière flexible,
en ce que des sections d'extrémité (8, 9; 31, 32) de la première partie formée (6; 21) présentent une épaisseur de tôle (D8, D9; D31, D32) supérieure à au moins une section intermédiaire (10, 33) de la première partie formée (6; 21) située entre les sections d'extrémité, et/ou,
en ce que des sections d'extrémité (8, 9; 31, 32) de la deuxième partie formée (7; 22) présentent une épaisseur de tôle (D8, D9; D31, D32) plus grande qu'au moins une section intermédiaire (10, 33) de la deuxième partie formée (7; 22) située entre les sections d'extrémité,
séparer la bande d'acier laminée de manière flexible en flans de tôle,
assembler et former, dans n'importe quel ordre, un premier et un second flan de tôle pour former un ensemble comprenant des première et seconde parties formées (6, 7; 21, 22) assemblées l'une à l'autre, les première et seconde parties formées (6, 7; 21, 22) ayant chacune un fond et des parois latérales et au moins une partie de plus grande épaisseur de tôle s'étendant transversalement à l'étendue longitudinale de la partie formée respective (6, 7; 21, 22).

13. Procédé selon la revendication 12,
**caractérisé en ce**
**que** la bande d'acier est fabriquée à partir d'un matériau d'acier durcissable, en particulier un matériau d'acier allié au manganèse et au bore,
le formage de la platine de tôle en partie formée (6, 7; 21, 22) s'effectuant au moyen d'un formage à chaud avec les étapes partielles de chauffage de la platine de tôle à la température d'austénitisation, de formage subséquent de la platine de tôle chauffée dans un outil de formage à chaud et de refroidissement rapide, de sorte qu'il en résulte une partie formée (6, 7; 21, 22) durcie.

14. Procédé selon la revendication 12 ou 13,
**caractérisé par** les étapes consistant à :
jonction d'une première platine en tôle et d'une deuxième platine en tôle disposée parallèlement à la première pour former un assemblage de platines, une zone de jonction s'étendant dans la direction longitudinale étant formée entre la première platine en tôle et la deuxième platine en tôle, et
formage de l'assemblage de platines dans un outil de formage de telle sorte que le premier élément en tôle est formé en la première partie formée (6; 21) et le deuxième élément en tôle est formé en la deuxième partie formée (7; 22), la zone d'jonction (15, 23) se trouvant entre les deux pièces formées (6, 7; 21, 22) après le formage.
